# EUROPÄISCHE PATENTSCHRIFT

(11) **EP 3 493 975 B1**
(45) Veröffentlichungstag und Bekanntmachung des Hinweises auf die Patenterteilung: **08.09.2021**
(21) Anmeldenummer: 17746393.2
(22) Anmeldetag: 31.07.2017
(51) Int. Cl.: B29C 65/10, B29C 65/00, A61J 1/14, B65D 41/02, B65D 53/04, B29C 49/42, B29L 31/00

(54) **VERFAHREN ZUM HERSTELLEN EINES VERSCHLUSSES BEI EINEM AUS KUNSTSTOFF HERGESTELLTEN BEHÄLTER UND BEHÄLTER**
METHOD FOR PRODUCING A CLOSURE IN A CONTAINER MADE OF PLASTIC AND CONTAINER
PROCÉDÉ DE FABRICATION D'UNE FERMETURE POUR UN RÉCIPIENT FABRIQUÉ EN MATIÈRE PLASTIQUE ET RÉCIPIENT

(30) Priorität: 06.08.2016 DE 102016009594
(43) Veröffentlichungstag der Anmeldung: 12.06.2019
(73) Patentinhaber: Kocher-Plastik Maschinenbau GmbH, 74429 Sulzbach-Laufen (DE)
(72) Erfinder: GESER, Johannes, 70839 Gerlingen (DE); SPALLEK, Michael, 55218 Ingelheim (DE); SPRENG, Philipp, 89233 Neu-Ulm (DE)
(74) Vertreter: Bartels und Partner, Patentanwälte
(86) Internationale Anmeldenummer: PCT/EP2017/000929
(87) Internationale Veröffentlichungsnummer: WO 2018/028820

(56) Entgegenhaltungen:
- DE-A1- 2 509 504
- DE-A1-102012 021 525
- JP-A- 2015 181 821
- US-A1- 2008 262 466

## Beschreibung

Die Erfindung betrifft ein Verfahren zum Herstellen eines Verschlusses bei einem in einem Blasformverfahren aus Kunststoff hergestellten, befüllten und verschlossenen Behälter mit den Schritten im Oberbegriff von Anspruch 1. Ferner betrifft die Erfindung einen Behälter mit einem nach diesem Verfahren hergestellten Verschluss.

Behälter, die aus Kunststoff nach dem Blow-Fill-Seal-Verfahren (BFS), das auch als bottelpack®-Verfahren bekannt ist, hergestellt sind, finden insbesondere für medizinische Zwecke weit verbreitete Anwendung, beispielsweise in Form von Infusionsflaschen. Für medizinische Anwendungen sind solche Behälter deshalb besonders geeignet, weil das Füllgut ausschließlich zu einem Polymer Kontakt hat, so dass diese Behälter selbst bei längeren Lagerzeiten unter ungünstigen Umgebungsbedingungen eine hohe Sicherheit gegen mikrobielle Verschmutzungen des Füllgutes bieten.

Verschlusskappen für solche an sich schon verschlossenen Behälter sind notwendig, um eine Wiederabdichtung zu erreichen, nachdem dem Behälter - zum Beispiel mit Hilfe von Injektionsspritze und Nadel - Substanzen zugespritzt oder entnommen wurden, oder um die Durchstechstelle des Einstechteils eines Infusionsgerätes - beispielhaft beschrieben in ISO 15759:2006 - während der Infusionsverabreichung sicher abzudichten.

Verfahren zum Herstellen eines solchen wiederabdichtenden Verschlusses bei derartigen Behältern sind Stand der Technik. Beispielsweise zeigt das Dokument DE 10 2012 021 525 A1 ein Verfahren der eingangs genannten Gattung auf, bei dem ein aus einem thermoplastischen Elastomer (TPE) bestehender Dichtstoff mit einem an einem Kopfteil des verschlossenen BFS-Behälters befindlichen Wandteil, das die Form einer nach außen gewölbten Membran besitzt, verschweißt wird. Die Temperatur des Schweißvorgangs liegt dabei deutlich oberhalb der Schmelztemperatur zumindest eines der Fügepartner, um schnell eine niedrig viskose Schmelze zur erzielen. Um bei den für das BFS-Verfahren geeigneten Kunststoffmaterialien des Behälters und einem aus einem thermoplastischen Elastomer (TPE) bestehenden Dichtstoff eine unlösbare Verbindung zu erzielen, wird bei den bekannten Verfahren der Schweißvorgang derart durchgeführt, dass die Oberflächen beider Fügepartner durch die starke Erhitzung aufgeschmolzen und mit nachfolgender kurzzeitiger Verpressung in wenigen Sekunden verschweißt werden. Hierfür kommen Schweißelemente zum Einsatz, die typischerweise auf 220 °C bis 285 °C erhitzt werden müssen. Bei diesem hohen Temperaturbereich und trotz der Begrenzung der Erhitzungsdauer auf wenige Sekunden, besteht die Gefahr des thermischen Abbaus der Kunststoffe, wobei toxische Abbauprodukte und Gase entstehen können, die im pharmazeutischen Umfeld nicht tolerabel sind. Bei der kurzen Zeitdauer des Schweißvorgangs besteht darüber hinaus die Gefahr einer zu geringen Haftung der Fügepartner. Überdies führt dieser Schweißvorgang nur zu einer Reduktion der Keimzahl der erwärmten Oberflächen, nicht jedoch zur Reduktion der Keimzahl im gesamten Raum zwischen der Verschlusskappe und der Membran des BFS-Behälters und den diesen Raum begrenzenden Flächen.

Die JP 2015-181821 A beschreibt ein Verfahren zum Herstellen eines Verschlusses bei einem in einem Blasformfüllverfahren (BFS) aus Kunststoff hergestellten, befüllten und verschlossenen Behälter mit den Schritten im Oberbegriff von Anspruch 1, bei dem zur Bildung einer unlösbaren Verbindung zwischen einem für einen Entnahme- und/oder Zugabevorgang vorgesehenen, vorzugsweise eine Einstichstelle bildenden Bereich einer Behälterwand des Behälters und einem Dichtstoff aus einem thermoplastischen Kunststoff, wie thermoplastischem Elastomer (TPE), ein Fügevorgang und gleichzeitig eine Keimzahlreduktion in einem Raum zwischen einer Verschlusskappe und der Behälterwand durchgeführt wird, bei dem die Fügepartner erwärmt und zur Verbindung aneinandergedrückt werden, wobei die Verschlusskappe den zwischen einer Innenwand der Verschlusskappe und dem Entnahmebereich der Behälterwand angeordneten Dichtstoff übergreift.

Weitere Verfahren zum Herstellen von Behältern gehen aus der US 2008/ 0262466 A1 und der DE 25 09 504 A1 hervor.

Ausgehend von diesem Stand der Technik stellt sich die Erfindung die Aufgabe, ein Verfahren der eingangs genannten Gattung anzugeben, das eine besonders sichere, unlösbare Verbindung der Fügepartner auf besonders schonende Weise und zugleich zu einer signifikanten Keimzahlreduktion im gesamten Raum zwischen Verschlusskappe und BFS-Behälter, insbesondere der Abschlusswand, ermöglicht.

Erfindungsgemäß ist diese Aufgabe durch ein Verfahren gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der Fügevorgang zwischen dem Dichtstoff und einer den Entnahmebereich bildenden nachgiebigen Membran der Behälterwand derart durchgeführt wird, dass die Fügepartner während eines keimzahlreduzierenden Prozesses auf eine Temperatur zwischen 105 °C und 140 °C erwärmt werden, und dass ein die Fügepartner aneinanderdrückender Fügeanpressdruck zumindest teilweise durch den durch Erwärmen auf die Membran wirkenden Innendruck des befüllten Behälters derart erzeugt wird, dass die flexibel ausgestaltete Membran ausgehend von einer in Richtung des Behälterinneren weisenden Einwölbung solange in Richtung des Dichtstoffes gepresst, vorzugsweise ausgewölbt, wird, bis die feste Verbindung zwischen Membran und dem Dichtstoff hergestellt ist.

Der thermische Fügevorgang zwischen dem Dichtstoff und einer den Entnahmebereich bildenden verformbaren Membran der Behälterwand wird derart durchgeführt, dass die Fügepartner in einem Autoklavierprozess langsam und kontinuierlich erwärmt werden und dass eine die Fügepartner aneinanderdrückende Fügekraft im Wesentlichen durch den beim Autoklavierprozess auf die Membran wirkenden Innendruck des Behälters erzeugt wird.

Besonders vorteilhaft wird das Temperaturzeitprofil des Prozesses so gewählt, dass es zu einer möglichst hohen Reduktion der Keimzahl kommt. Demgemäß ist es erfindungsgemäß möglich, den thermischen Fügevorgang unter für die Autoklavierung der fraglichen Behälter weitgehend standardisierten Bedingungen durchzuführen, nämlich bei Temperaturen von nicht mehr als 140 °C und über eine Dauer von mindestens 10 Minuten, entsprechend dem europäischen Arzneibuch, beispielsweise bei 121 °C über eine Zeitdauer von 20 Minuten. Dies bedeutet, dass die Erfindung ein stoffschlüssiges Niedertemperatur-Langzeit-Fügeverfahren darstellt, wobei ein über einen entsprechend langen Zeitraum wirkender Anpressdruck zwischen den Fügepartnern durch den bei der Autoklavierung wirkenden Innendruck des Behälters durch Verformen der nachgiebigen, die Kontaktfläche bildenden Membran der Behälterwand erzeugt wird und es zu einer signifikanten Keimzahlreduktion bis hin zu einer Sterilisation kommt. Trotz des - gegenüber dem üblichen Schweißverfahren - sehr viel niedrigeren Temperaturbereichs und der dadurch erreichten Schonung des Füllguts ist eine sichere stoffschlüssige Verbindung der Fügepartner erreichbar.

Eine besonders sichere Verbindung ist erreichbar, wenn während des Fügevorgangs die Außenseite des Dichtstoffs gegen den Anpressdruck abgestützt wird.

Mit besonderem Vorteil wird der Fügevorgang als Niedertemperatur-Langzeit-Fügeverfahren unter keimzahlreduzierenden Autoklavierbedingungen bei Temperaturen von 100 °C bis 140 °C über einen Zeitraum von mindestens 10 Minuten bei auf die Membran wirkenden Drücken bis 4 bar in einem Autoklaven durchgeführt.

In vorteilhafter Weise wird dabei der Fügevorgang bei einer Temperatur von 108 °C bis 138 °C, bevorzugt 110 °C bis 129 °C, besonders bevorzugt bei 115 °C bis 124 °C, über eine Dauer von mindestens 10 Minuten durchgeführt.

Für die Abstützung des Dichtstoffs kann mit besonderem Vorteil so vorgegangen werden, dass der Dichtstoff durch eine am Behälter angebrachte steife Verschlusskappe gegen den Anpressdruck abgestützt wird. Hierfür kann beispielsweise der Dichtstoff in eine aus Kunststoff bestehende Kappe integriert sein, die durch Schweißen am Kopfteil des Behälters druck- und mikrobiologisch dicht angebracht ist. Hierdurch wird erreicht, dass der typischerweise im Autoklavieren herrschende Gegendruck nicht innerhalb des verbleibenden Kopfraumes zwischen Verschlusskappe und der die Kontaktfläche bildende Membran der Behälterwand einwirken kann. D.h. hierdurch wird erreicht, dass im Kopfraum der Verschlusskappe ein gegenüber dem Gasraum im Behälter niedrigerer Druck herrscht.

Eine ausreichende Haftung der Fügepartner einerseits und eine zuverlässige Wiederabdichtung der Durchstechstelle andererseits ist erreichbar, wenn ein Dichtstoff mit einer Härte gemäß ISO 868 von weniger als 60 Shore A, bevorzugt weniger als 50 Shore A, besonders bevorzugt weniger als 40 Shore A bei einer Autoklaviertemperatur von mehr als 105 °C benutzt wird.

Ein besonders hoher Anpressdruck der Fügepartner ist erreichbar, wenn der Fügevorgang an einer Membran durchgeführt wird, deren Fläche größer ist als die gebildete Füge-Kontaktfläche von Dichtstoff und Membran.

Als Werkstoffe für den Dichtstoff können mit Vorteil Materialien wie Styrolblockcopolymere (TPS), thermoplastische Vulkanisate (TPV), insbesondere basierend auf EPDM/PP Blends, benutzt werden.

Gegenstand der Erfindung ist auch ein Behälter aus Kunststoff, der eine gemäß dem Verfahren nach einem der Ansprüche 1 bis 9 hergestellte Verschlusskappe besitzt und die im Patentanspruch 10 angegebenen Merkmale aufweist.

Weitere Ausgestaltungen des Behälters sind in den folgenden Patentansprüchen 11 bis 15 angegeben.

Nachstehend ist die Erfindung anhand der beigefügten Zeichnungen im Einzelnen erläutert. Es zeigen:

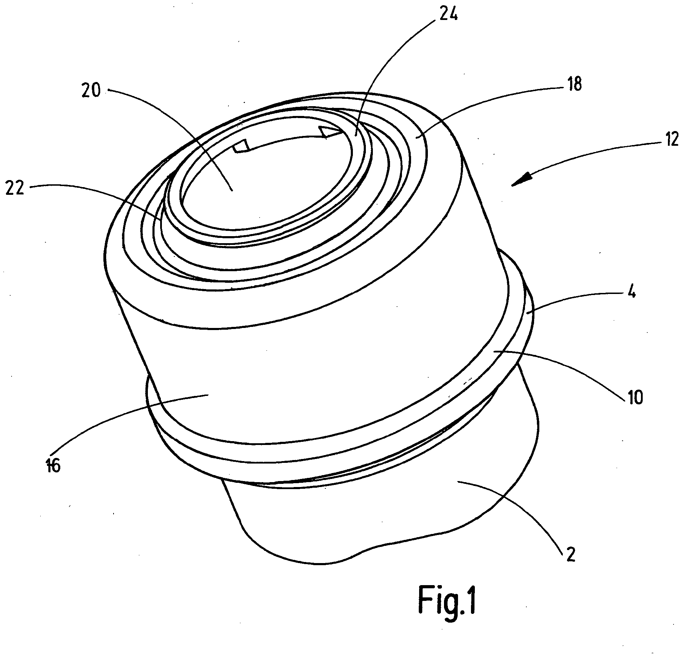

- Fig. 1: eine gegenüber einer praktischen Ausführungsform in größerem Maßstab gezeichnete perspektivische Schrägansicht lediglich des dem Behälterkopf benachbarten Bereichs eines mit einer erfindungsgemäßen Verschlusskappe versehenen Behälters;
- Fig. 2: einen Längsschnitt des in Fig. 1 gezeigten Bereichs des Behälterkopfs, versehen mit einem ersten Ausführungsbeispiel der erfindungsgemäßen Verschlusskappe, wobei der Zustand vor Durchführen des Fügevorganges im Autoklaven dargestellt ist;
- Fig. 3: einen der Fig. 2 entsprechenden Längsschnitt, wobei der Zustand nach erfolgtem thermischem Fügen im Autoklaven dargestellt ist;
- Fig. 4: einen den Fig. 2 und 3 entsprechenden Längsschnitt, wobei der Behälterkopf mit einer Verschlusskappe gemäß einem zweiten Ausführungsbeispiel der Erfindung versehen und der Zustand vor dem thermischen Fügeprozess im Autoklaven dargestellt ist; und
- Fig. 5: einen der Fig. 4 entsprechenden Längsschnitt, wobei der Zustand nach dem Fügeverfahren im Autoklaven dargestellt ist.

Nachstehend ist die Erfindung anhand von Ausführungsbeispielen erläutert, bei denen die erfindungsgemäße Verschlusskappe bei Behältern vorgesehen ist, wie sie als Infusionsflasche oder mit kleineren Abmessungen als Ampullen benutzt werden können, beispielsweise für eine Entnahme des Füllguts durch unmittelbares Einstechen einer Injektionskanüle. Bei der Anwendung als Infusionsflasche kann ein Einstechteil für die Entnahme von Füllgut verwendet werden. Die Behälter sind aus einem Kunststoffmaterial hergestellt, das für das bekannte Blow-Fill-Seal-Verfahren, beispielsweise entsprechend dem bekannten bottelpack®-System geeignet ist, also beispielsweise aus einem Polyolefin, wie einem Polypropylen, Polyethylen niedriger oder hoher Dichte oder deren Copolymere.

In den Figuren, die als Teildarstellungen eines Gesamtbehälters ausgeführt sind, von dem das Behälterhauptteil weggelassen ist, ist lediglich der Kopfbereich dargestellt. Dieser weist ein sich an das Behälterhauptteil anschließendes, kreiszylindrisches Halsteil 2 auf, dessen Behälterwand an einer wulstartigen, radialen Erweiterung 4 einstückig in eine Abschlusswand 6 übergeht. Diese hat die Form einer von der Erweiterung 4 ausgehenden, kuppenartigen Erhebung, deren Durchmesser geringer ist als der Außendurchmesser der Erweiterung 4. Das obere Behälterwandteil 8, das sich in Form einer Membran über den Durchmesser der von der Abschlusswand 6 gebildeten Kuppe erstreckt, bildet den Entnahmebereich, der für den Zugang zum Behälterinhalt (zwecks Zugabe oder Entnahme) beispielsweise mit einer Kanüle oder einem Einstechdorn durchstechbar ist. Die am Übergang zwischen der Erweiterung 4 und der Abschlusswand 6 radial nach innen verlaufende Stufe 10 bildet die Anlagefläche für eine vorzugsweise druckfest ausgebildete Verschlusskappe 12. Diese besitzt die Form eines Bechers mit kreiszylinderförmiger Seitenwand 16 und ebenflächigem Boden 18 und ist mit ihrem Öffnungsrand 14 an der Stufe 10 der Erweiterung 4 fest angebracht, vorzugsweise durch Spiegelschweißen oder Umspritzen. Der Boden 18 weist ein zentral gelegenes, sich über einen Teil der Fläche des Bodens 18 erstreckendes Öffnungsteil 20 auf, das mit dem Boden 18 einstückig, jedoch an einer umfänglichen umlaufenden Sollbruchstelle 22 vom Boden 18 für den Durchstechvorgang abtrennbar ist. Für die bequeme Durchführung des Trennvorgangs ist an der Außenseite des Kappenteils 20 ein eine Grifflasche bildender Ringkörper 24 angeformt.

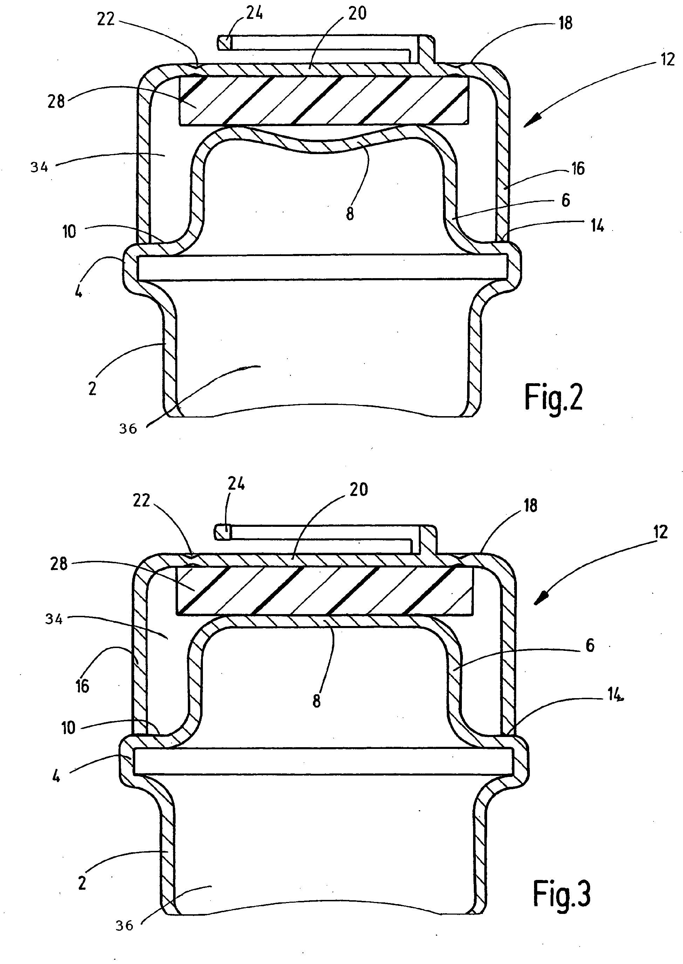

Die Fig. 2 und 3 verdeutlichen ein erstes Ausführungsbeispiel des erfindungsgemäßen Verfahrens zum Herstellen eines Verschlusses des jeweiligen Behälters. Für eine unlösbare, formschlüssige Verbindung eines Dichtstoffs 28 mit dem eine Membran bildenden Behälterwandteil 8 sieht die Erfindung ein Niedertemperatur-Langzeit-Fügeverfahren vor, das durch Autoklavieren des befüllten und verschlossenen Behälters bewirkt wird. Geeignete Autoklavierprozesse finden bei Temperaturen von zumindest 105 °C über einen Zeitraum von mindestens 10 Minuten statt, wobei vorteilhaft die Bedingungen des WHO-Standards - eine Maximal-Temperatur von 121 °C über 15 Minuten - verwendet werden. Unter diesen Bedingungen kommt es bei dem Dichtstoff 28, der in Form einer runden Scheibe aus einem elastischen, thermoplastischen Elastomer (TPE) auf die vom Behälterwandteil 8 gebildete flexible Membran aufgelegt ist, ebenso wie bei dem Behälterwandteil, zu einer langsamen druck- und temperaturbedingten Verformung/Erweichung. Gleichzeitig führt die kontinuierliche Erwärmung bis zum Erreichen des maximalen Temperaturniveaus zu einer kontinuierlichen Ausdehnung des Füllgutes, zur kontinuierlichen Erhöhung des Dampfdruckes des Füllguts und zur kontinuierlichen Druckerhöhung im Gasraum 36 über dem Füllgut und somit zu einer kontinuierlichen Erhöhung des Innendrucks im Behälter. Typischerweise werden bei wässrigen Füllgütern hierbei Werte von einigen bar erreicht, wodurch die flexible Membran verformt und an den Dichtstoff 28 mit kontinuierlich steigender Kraft angedrückt wird. Bei dem in Fig. 2 und 3 gezeigten Beispiel ist der Dichtstoff 28 gegen den Anpressdruck durch Anlage der Dichtstoffoberseite am Boden 18 der Verschlusskappe 12 abgestützt, die aus einem im Vergleich zum Behälterwandteil 8 steifer ist und dadurch eine mechanische Abstützung für die Scheibe des Dichtstoffs 28 bildet. Unter dem Einfluss des Innendrucks des Behälters verformt sich die vom Behälterwandteil 8 gebildete verformbare Membran aus der in Fig. 2 gezeigten, vor der Autoklavierung eingenommenen Lage in die in Fig. 3 gezeigte Position, in der sie über die Fläche des Einstichbereichs während des Autoklavierprozesses am Dichtstoff 28 mit vom Innendruck erzeugter Anpresskraft anliegt. Der über die Dauer der Autoklavierung stattfindende Langzeit-Fügevorgang führt innerhalb des Entnahmebereichs zur sicheren stoffschlüssigen Verbindung von Dichtstoff 28 und Wandbereich 8, so dass, nach Abtrennen des Öffnungsteils 20 ein leckagefreier und wiederabdichtender Zugang zum Füllgut erfolgen kann. Überraschenderweise hat sich herausgestellt, dass der erfindungsgemäße Prozess die Keimzahl im Raum 34 zwischen der Verschlusskappe 12 und der Abschlusswand 6 signifikant reduziert, d.h. es zu einer mindestens 1000-fachen Abreicherung von Keimen kommt, obwohl hierfür bei einer Hitzesterilisation weitaus höhere Temperaturen von typischerweise mehr als 200 °C notwendig sind.

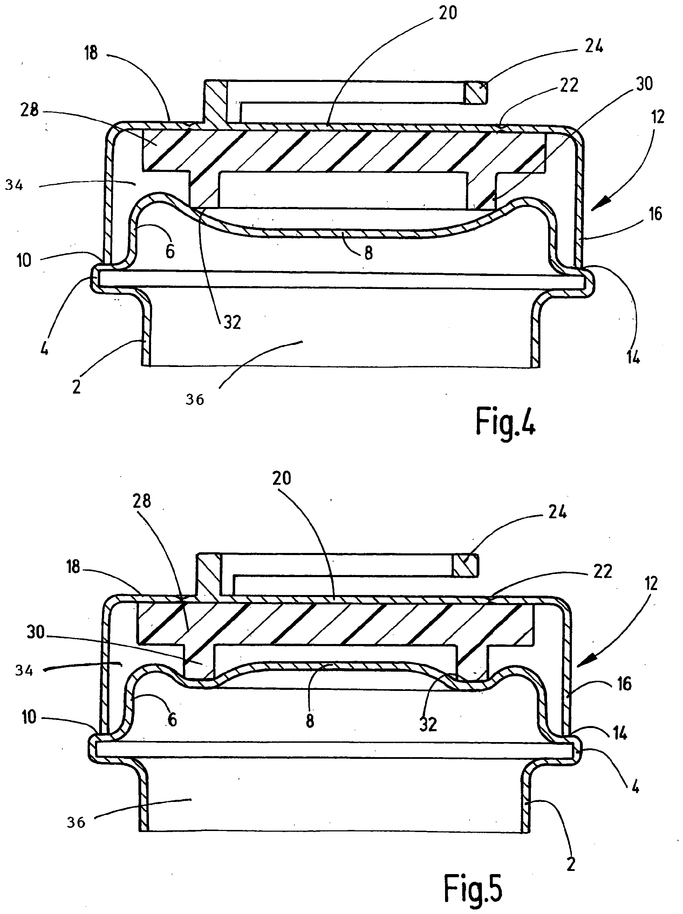

Die Fig. 4 und 5 verdeutlichen ein zweites Ausführungsbeispiel, bei dem im Unterschied zum ersten Beispiel ein Dichtstoff 28 benutzt wird, der ebenfalls die Form einer kreisrunden Scheibe besitzt, jedoch lediglich mit seiner Oberseite vollflächig am Boden 18 der Verschlusskappe 12 anliegt. Die dem die Membran bildenden Wandteil 8 zugewandte Seite der Scheibe des Dichtstoffs 28 bildet eine zum Scheibenumfang konzentrische, axial vorspringende Ringrippe 30, deren Durchmesser derart gewählt ist, dass sie nahezu den gesamten Entnahmebereich umfasst. Die Ringrippe 30 bildet mit ihrer ebenen, in einer Radialebene verlaufenden Endfläche 32 die kreisringförmige Füge-Kontaktfläche, an der die vom Wandbereich 8 gebildete Membran, wenn sie sich bei der Autoklavierung aus der in Fig. 4 gezeigten Position, unter der Wirkung des Behälterinnendrucks verformt, anpresst. Bei der wesentlich geringeren, durch die Endfläche 32 der Ringrippe 30 gebildeten Kontaktfläche ergibt sich eine den thermischen Fügevorgang begünstigende höhere Pressung an der Füge-Kontaktfläche.

Zu den geeigneten Behältermaterialien gehören Polypropylen (PP), Polyethylen niedriger (LDPE und LLDPE) und hoher Dichte (HDPE), bevorzugt Polyethylen niedriger Dichte und Polypropylen geringer Steifigkeit, insbesondere Bormed SB 815 MO der Firma Borealis. Auch sind an sich bekannte mehrschichtig aufgebaute Behälter möglich, wie zum Beispiel in der DE 103 47 908 A1 beschrieben. Es hat sich gezeigt, dass eine gute Wiederabdichtung bei gleichzeitig ausreichender Haftung insbesondere dann erreicht wird, wenn das als Dichtstoff 28 benutzte Elastomer eine Härte gemäß ISO 868 von weniger als 60 Shore A, bevorzugt weniger als 50 Shore A, besonders bevorzugt weniger als 40 Shore A aufweist und der Fügeprozess im Autoklaven bei Maximaltemperaturen zwischen 105 °C und 140 °C und Dauern von mindestens 10 Minuten durchgeführt wird.

Das erfindungsgemäße Langzeit-Niedertemperatur-Fügeverfahren lässt sich auch mit Verschlusskappen mit zwei, zum Teil unabhängig voneinander freilegbaren Durchstechöffnungen anwenden, wie beispielsweise aus DE 10 2007 005 407 A1 oder US 8616401 bekannt.

Ebenfalls sind andere Behälterkopf-Geometrien verwendbar, wie beispielsweise aus DE 10 2013 012 809 A1 bekannt.

Beispiel Nr. 1:

Auf den Kragen eines befüllten und verschlossenen Infusionsbehälters gemäß DIN EN ISO 15747, hergestellt nach dem Blasformfüllverfahren (BFS), wurde eine Verschlusskappe 12 gemäß ISO 15759:2005 Form A aufgebracht. Die Verschlusskappe 12 wurde durch Anschweißen mit dem Rand 14 des Behälter-Halsteils 2 druck und mikrobiologisch dicht verbunden. Der Dichtstoff 28 bestand aus einer in die Verschlusskappe 12 eingelegten Elastomerscheibe aus mediprene®500300M der Firma ELASTO, der Infusionsbehälter bestand aus Polypropylen Bormed SB 815 MO der Firma Borealis. Nach dem Aufbringen der Verschlusskappe lag der Dichtstoff 28 an der vom Behälterwandteil 8 gebildeten Membran nicht haftend an. Nach einem Autoklavierprozess in einem Stützdruck-Autoklaven der Firma Bosch bei einer Temperatur von 121 °C und einer Haltezeit von 20 Minuten bei dieser Temperatur wurde das Gehäuse der Verschlusskappe 12 zerstörend entfernt und die Kraft gemessen, die notwendig ist, um den Dichtstoff 28 von der Membran des Wandteils 8 abzuziehen. Die Haftfestigkeit lag bei durchschnittlich 17 N / 15 mm gemessen in Analogie zu DIN 55 529 (Siegelnahthaftfestigkeit).

Messungen zur Bestimmung der Keimzahlreduktion des erfindungsgemäßen Verfahrens wurden gemäß DIN 58946 und DIN 58947 unter Beachtung der detaillierten Vorschriften des amerikanischen Arzneibuches (USP 29 Kap 71, 1211 und 1229) durchgeführt. Als Prüfkeim wurde Geobacillus stearothermophilus sowohl auf Filterpapierstreifen als auch in Nährmedium in den Raum 34 zwischen der Verschlusskappe 12 und der Abschlusswand 6 eingebracht und nach dem Fügeprozess untersucht.

In dem obigen Beispiel konnte eine Keimzahlreduktion um den Faktor 1.000.000 erreicht werden.

Weitere Beispiele (Nr. 2 bis Nr. 39) sind in der folgenden Tabelle zusammengefasst. Beispiele 3, 7, 17, 20 zeigen zwar eine ausreichende Haftkraft jedoch eine geringere Keimzahlreduktion.

| | **Materialien** | | | | | | **Prozess** | | **Ergebnisse** | |
|---|---|---|---|---|---|---|---|---|---|---|
| **Bsp. Nr.** | **Behälter typ** | **Behältermaterial** | | **Elastomer Hersteller** | **Elastomer- Typ** | **Shore A-Härte** | **Autoklavier bedingungen** | | **durchschnitt Haftkraft in N / 15mm** | **KeimzahlReduktion** |
| | | **Klasse** | **Type** | | | | **Temp in °C** | **Zeit in min** | | |
| 1 | Flasche | PP | Borealis SB 815 MO | ELASTO | Mediprene® 500350M | 35 | 120-122 | 20 | 17 | hoch |
| 2 | Flasche | LDPE | LyondellBasell 3020D | ELASTO | Mediprene® 500200M | 20 | 106-108 | 85 | 8 | hoch |
| 3 | Ampulle | LDPE | LyondellBasell 3220D | ELASTO | Mediprene® 500350M | 35 | 110-113 | 10 | 8 | sehr gering |
| 4 | Flasche | LDPE | LyondellBasell 3220D | ELASTO | Mediprene® 500200M | 20 | 110-113 | 80 | 9 | hoch |
| 5 | Ampulle | LDPE | LyondellBasell 3220D | ELASTO | Mediprene® 500350M | 35 | 110-113 | 80 | 9 | hoch |
| 6 | Ampulle | LDPE | LyondellBasell 3220D | ELASTO | Mediprene® 500350M | 35 | 110-113 | 40 | 9 | mittel |
| 7 | Ampulle | LDPE | LyondellBasell 3220D | ELASTO | Mediprene® 500350M | 35 | 110-113 | 20 | 10 | gering |
| 8 | Flasche | LDPE | LyondellBasell 3020D | GLS | Versaflex™ HC 2110-35N | 34 | 106-108 | 85 | 10 | hoch |
| 9 | Ampulle | LDPE | LyondellBasell 3020D | ELASTO | Mediprene® 500350M | 35 | 106-108 | 85 | 10 | hoch |
| 10 | Flasche | LDPE | LyondellBasell 3220D | GLS | Versaflex™ HC 2110-35N | 34 | 110-113 | 80 | 11 | hoch |
| 11 | Flasche | PP | Borealis SB 815 MO | ELASTO | Mediprene® 500200M | 20 | 120-122 | 20 | 12 | hoch |
| 12 | Flasche | LDPE | LyondellBasell 3220D | Wittenburg | Cawiton PR 2747 | 38 | 110-113 | 80 | 12 | hoch |
| 13 | Flasche | LDPE | LyondellBasell 3020D | Wittenburg | Cawiton PR 2747 | 38 | 106-108 | 90 | 12 | hoch |
| 14 | Flasche | PP | Borealis SB 815 MO | GLS | Versaflex™ HC 2110-35N | 34 | 120-122 | 20 | 13 | hoch |
| 15 | Flasche | LDPE | LyondellBasell 3220D | Kra iburg | THERMOLAST® M HTM8502/64 | 41 | 110-113 | 80 | 13 | hoch |
| 16 | Flasche | PP | LyondellBasell RP 270G | ELASTO | Mediprene® 500200M | 20 | 120-122 | 20 | 13 | hoch |
| 17 | Flasche | LDPE | LyondellBasell 3020D | Wittenburg | Cawiton PR 2747 | 38 | 106-108 | 10 | 13 | sehr gering |
| 18 | Flasche | LDPE | LyondellBasell 3020D | Wittenburg | Cawiton PR 2747 | 38 | 106-108 | 50 | 13 | mittel |
| 19 | Flasche | LDPE | LyondellBasell 3020D | Wittenburg | Cawiton PR 2747 | 38 | 106-108 | 85 | 13 | hoch |
| 20 | Flasche | LDPE | LyondellBasell 3020D | Wittenburg | Cawiton PR 2747 | 38 | 106-108 | 20 | 14 | gering |
| 21 | Flasche | LDPE | LyondellBasell 3220D | ELASTO | Mediprene® 500350M | 35 | 110-113 | 80 | 14 | hoch |
| 22 | Flasche | LDPE | LyondellBasell 3020D | Kra iburg | THERMOLAST® M HTM8502/64 | 41 | 106-108 | 85 | 14 | hoch |
| 23 | Ampulle | PP | Borealis SB 815 MO | ELASTO | Mediprene® 500350M | 35 | 120-122 | 20 | 14 | hoch |
| 24 | Flasche | PP | Borealis SB 815 MO | Wittenburg | Cawiton PR 2747 | 38 | 120-122 | 20 | 15 | hoch |
| 25 | Flasche | LDPE | LyondellBasell 3220D | GLS | Versaflex™ HC 2110-43N | 43 | 110-113 | 80 | 15 | hoch |
| 26 | Flasche | PP | LyondellBasell RP 270G | GLS | Versaflex™ HC 2110-35N | 34 | 120-122 | 20 | 15 | hoch |
| 27 | Flasche | LDPE | LyondellBasell 3020D | ELASTO | Mediprene® 500350M | 35 | 106-108 | 85 | 15 | hoch |
| 28 | Flasche | LDPE | LyondellBasell 3020D | GLS | Versaflex™ HC 2110-43N | 43 | 106-108 | 85 | 15 | hoch |
| 29 | Ampulle | PP | LyondellBasell RP 270G | ELASTO | Mediprene® 500350M | 35 | 121-123 | 20 | 15 | hoch |
| 30 | Flasche | PP | LyondellBasell RP 270G | Wittenburg | Cawiton PR 2747 | 38 | 120-122 | 20 | 16 | hoch |
| 31 | Flasche | LDPE | LyondellBasell 3020D | ELASTO | Mediprene® 500520M | 52 | 106-108 | 85 | 16 | hoch |
| 32 | Flasche | PP | Borealis SB 815 MO | Kraiburg | THERMOLAST® M HTM8502/64 | 41 | 120-122 | 20 | 17 | hoch |
| 33 | Flasche | PP | LyondellBasell RP 270G | Kraiburg | THERMOLAST® M HTM8502/64 | 41 | 120-122 | 20 | 17 | hoch |
| 34 | Flasche | LDPE | LyondellBasell 3220D | ELASTO | Mediprene® 500520M | 52 | 110-113 | 80 | 17 | hoch |
| 35 | Flasche | PP | Borealis SB 815 MO | GLS | Versaflex™ HC 2110-43N | 43 | 120-122 | 20 | 18 | hoch |
| 36 | Flasche | PP | LyondellBasell RP 270G | ELASTO | Mediprene® 500350M | 35 | 120-122 | 20 | 19 | hoch |
| 37 | Flasche | PP | Borealis SB 815 MO | ELASTO | Mediprene® 500520M | 52 | 120-122 | 20 | 20 | hoch |
| 38 | Flasche | PP | LyondellBasell RP 270G | GLS | Versaflex™ HC 2110-43N | 43 | 120-122 | 20 | 20 | hoch |
| 39 | Flasche | PP | LyondellBasell RP 270G | ELASTO | Mediprene® 500520M | 52 | 120-122 | 20 | 24 | hoch |

## Patentansprüche

1. Verfahren zum Herstellen eines Verschlusses bei einem in einem Blasformfüllverfahren (BFS) aus Kunststoff hergestellten, befüllten und verschlossenen Behälter, bei dem zur Bildung einer unlösbaren Verbindung zwischen einem für einen Entnahme- und/oder Zugabevorgang vorgesehenen, vorzugsweise eine Einstichstelle bildenden Bereich (8) einer Behälterwand (6) des Behälters und einem Dichtstoff (28) aus einem thermoplastischen Kunststoff, wie thermoplastischem Elastomer (TPE), ein Fügevorgang und gleichzeitig eine Keimzahlreduktion in einem Raum (34) zwischen einer Verschlusskappe (12) und der Behälterwand (6) durchgeführt wird, bei dem die Fügepartner (8, 28) erwärmt und zur Verbindung aneinandergedrückt werden, wobei die Verschlusskappe (12) den zwischen einer Innenwand der Verschlusskappe (12) und dem Entnahmebereich (8) der Behälterwand (6) angeordneten Dichtstoff (28) übergreift, **dadurch gekennzeichnet, dass** der Fügevorgang zwischen dem Dichtstoff (28) und einer den Entnahmebereich bildenden nachgiebigen Membran (8) der Behälterwand (6) derart durchgeführt wird, dass die Fügepartner (8, 28) während eines keimzahlreduzierenden Prozesses auf eine Temperatur zwischen 105 °C und 140 °C erwärmt werden, und dass ein die Fügepartner (8, 28) aneinanderdrückender Fügeanpressdruck zumindest teilweise durch den durch Erwärmen auf die Membran (8) wirkenden Innendruck des befüllten Behälters derart erzeugt wird, dass die flexibel ausgestaltete Membran (8) ausgehend von einer in Richtung des Behälterinneren weisenden Einwölbung solange in Richtung des Dichtstoffes (28) gepresst wird, bis die feste Verbindung zwischen Membran (8) und dem Dichtstoff (28) hergestellt ist.

2. Verfahren nach Anspruch 1, **dadurch gekennzeichnet, dass** beim Fügevorgang die Außenseite des Dichtstoffes (28) gegen den Anpressdruck abgestützt wird.

3. Verfahren nach Anspruch 1 oder 2, **dadurch gekennzeichnet, dass** der Fügevorgang bei Temperaturen von 105 °C bis 140 °C über einen Zeitraum von mindestens 5 Minuten bei auf die Membran (8) wirkenden Drücken bis 4 bar durchgeführt wird.

4. Verfahren nach einem der vorstehenden Ansprüche, **dadurch gekennzeichnet, dass** der Fügevorgang in einem Autoklaven durchgeführt wird.

5. Verfahren nach einem der vorstehenden Ansprüche, **dadurch gekennzeichnet, dass** der Fügevorgang bei einer Temperatur von 108 °C bis 138 °C, bevorzugt 110 °C bis 129 °C, besonders bevorzugt bei 115 °C bis 124 °C über eine Dauer von mindestens 10 Minuten durchgeführt wird.

6. Verfahren nach einem der vorstehenden Ansprüche, **dadurch gekennzeichnet, dass** der Dichtstoff (28) durch eine am Behälterkopf (4) des Behälters angebrachte steife Verschlusskappe (12) gegen den Anpressdruck abgestützt wird.

7. Verfahren nach einem der vorstehenden Ansprüche, **dadurch gekennzeichnet, dass** ein Dichtstoff (28) mit einer Härte gemäß ISO 868 von weniger als 60 Shore A, bevorzugt weniger als 50 Shore A, besonders bevorzugt weniger als 40 Shore A bei einer Autoklaviertemperatur von mehr als 105 °C benutzt wird.

8. Verfahren nach einem der vorstehenden Ansprüche, **dadurch gekennzeichnet, dass** der Fügevorgang an einer Membran (8) durchgeführt wird, deren Fläche größer ist als die mit dem Dichtstoff (28) gebildete Füge-Kontaktfläche (32).

9. Verfahren nach einem der vorstehenden Ansprüche, **dadurch gekennzeichnet, dass** als Dichtstoff (28) Materialien wie Styrolblockcopolymere (TPS), thermoplastische Vulkanisate (TPV), insbesondere basierend auf EPDM/PP Blends, benutzt werden.

10. Behälter, der einen gemäß dem Verfahren nach einem der Ansprüche 1 bis 9 hergestellten Verschluss aufweist und aus Kunststoff in einem Blasformverfahren (BFS) hergestellt, befüllt und verschlossen ist und dessen Behälterwand (6, 8) zwecks Zugang zum Füllgut mittels einer Kanüle oder eines Einstechteils durchstechbar ist, wobei der Verschluss einen Dichtstoff (28) zur Abdichtung einer bei einem Entnahmevorgang an einem Entnahmebereich (8) der Behälterwand (6) gebildeten Einstichstelle aufweist, wobei eine Verschlusskappe (12) den zwischen einer Innenwand der Verschlusskappe (12) und dem Entnahmebereich (8) der Behälterwand (6) angeordneten Dichtstoff (28) übergreift, **dadurch gekennzeichnet, dass** der jeweilige Dichtstoff (28) auf der der Umgebung zugewandten Außenseite des die Einstichstelle aufweisenden Entnahmebereichs (8) der Behälterwand (6) angeordnet ist und dass der jeweilige Dichtstoff (28) über eine Fügeverbindung stoffschlüssig mit der zugewandten Behälterwand (6, 8) verbunden ist, die in mindestens einer Ebene verläuft.

11. Behälter nach Anspruch 10, **dadurch gekennzeichnet, dass** an einem mit einem Behälterhauptteil über ein Halsteil (2) verbundenen Behälterkopf (4) eine Verschlusskappe (12) angebracht ist.

12. Behälter nach Anspruch 11, **dadurch gekennzeichnet, dass** der Entnahmebereich am Behälterkopf durch ein eine nachgiebige Membran (8) bildendes Behälterwandteil gebildet ist, an dem der Dichtstoff (28) anliegt, dessen der Membran (8) abgewandte Seite an der Verschlusskappe (12) abgestützt ist.

13. Behälter nach einem der Ansprüche 10 bis 12, **dadurch gekennzeichnet, dass** ein Dichtstoff (28) in Form eines scheibenförmigen Körpers vorgesehen ist.

14. Behälter nach Anspruch 13, **dadurch gekennzeichnet, dass** der scheibenförmige Dichtstoff (28) für die Bildung der Kontaktfläche (32) an der Membran (8) an der dieser zugewandten Seite mindestens eine vorspringende Ringrippe (30) aufweist.

15. Behälter nach einem der Ansprüche 11 bis 14, **dadurch gekennzeichnet, dass** die Verschlusskappe (12) aus einem durch druckdichtes Schweißen am Behälterkopf (4) befestigten Kunststoffmaterial gebildet ist und ein für den Zugang zum Füllgut ablösbares Öffnungsteil (20) aufweist.

## Claims

1. Method for producing a closure in a filled and sealed container made of plastic in a blow-fill-seal process (BFS) in which, in order to form a permanent connection between a region (8) of a container wall (6) of the container, which region is provided for a removal and/or addition process and preferably forms a puncture site, and a sealant (28) made of a thermoplastic, such as a thermoplastic elastomer (TPE), a joining process and, at the same time, a bacterial count reduction are carried out in a space (34) between a closure cap (12) and the container wall (6), during which process the joining partners (8, 28) are heated and pressed against each other for joining, wherein the closure cap (12) overlaps the sealant (28) disposed between an inner wall of the closure cap (12) and the removal region (8) of the container wall (6), **characterised in that** the joining process between the sealant (28) and a flexible diaphragm (8) of the container wall (6) forming the removal region is carried out in such a manner that the joining partners (8, 28) are heated to a temperature between 105 °C and 140 °C during a bacterial count reducing process, and **in that** a joining contact pressure which presses the joining partners (8, 28) against each other is generated at least in part by the internal pressure of the filled container acting on the diaphragm (8) as a result of heating, in such a manner that the flexibly formed diaphragm (8), starting from an indentation pointing in the direction of the container interior, is pressed in the direction of the sealant (28) until the permanent bond between the diaphragm (8) and the sealant (28) is produced.

2. Method according to claim 1, **characterised in that** the outside of the sealant (28) is supported against the contact pressure during the joining process.

3. Method according to claim 1 or 2, **characterised in that** the joining process is carried out at temperatures of 105 °C to 140 °C for a period of at least 5 minutes at pressures acting on the diaphragm (8) of up to 4 bar.

4. Method according to one of the preceding claims, **characterised in that** the joining process is carried out in an autoclave.

5. Method according to one of the preceding claims, **characterised in that** the joining process is carried out at a temperature of 108 °C to 138 °C, preferably 110 °C to 129 °C, especially preferably at 115 °C to 124 °C for a duration of at least 10 minutes.

6. Method according to one of the preceding claims, **characterised in that** the sealant (28) is supported against the contact pressure by a rigid closure cap (12) attached to the container head (4) of the container.

7. Method according to one of the preceding claims, **characterised in that** a sealant (28) with a hardness according to ISO 868 of less than 60 Shore A, preferably less than 50 Shore A, especially preferably less than 40 Shore A, is used at an autoclaving temperature of more than 105 °C.

8. Method according to one of the preceding claims, **characterised in that** the joining process is carried out on a diaphragm (8), the area of which is larger than the joint contact area (32) formed with the sealant (28).

9. Method according to one of the preceding claims, **characterised in that** materials such as styrene block copolymers (TPS), thermoplastic vulcanizates (TPV), in particular based on EPDM/PP blends, are used as the sealant (28).

10. Container having a closure produced in accordance with the method according to one of claims 1 to 9 and which is made of plastic, filled and sealed in a blow-fill-seal process (BFS) and the container wall (6, 8) of which can be pierced by means of a cannula or a spike for the purpose of access to the filling material, wherein the closure has a sealant (28) for sealing a puncture site formed in a removal region (8) of the container wall (6) during a removal process, wherein a closure cap (12) overlaps the sealant (28) disposed between an inner wall of the closure cap (12) and the removal region (8) of the container wall (6), **characterised in that** the sealant (28) in each case is disposed on the outside, directed towards the environment, of the removal region (8) of the container wall (6) which has the puncture site and **in that** the sealant (28) in each case is firmly bonded to the facing container wall (6, 8) via a joint which extends in at least one plane.

11. Container according to claim 10, **characterised in that** a closure cap (12) is attached to a container head (4) which is connected to a container main part via a neck part (2).

12. Container according to claim 11, **characterised in that** the removal region on the container head is formed by a container wall part, forming a flexible diaphragm (8), the sealant (28) bearing against said container wall part, the side of which directed away from the diaphragm (8) is supported on the closure cap (12).

13. Container according to one of claims 10 to 12, **characterised in that** a sealant (28) is provided in the form of a disc-shaped body.

14. Container according to claim 13, **characterised in that** the disc-shaped sealant (28), for forming the contact area (32) on the diaphragm (8), has at least one protruding annular rib (30) on the side directed towards the diaphragm.

15. Container according to one of claims 11 to 14, **characterised in that** the closure cap (12) is formed of a plastic material attached to the container head (4) by pressure-tight welding and has an opening part (20) which is detachable for access to the filling material.

## Revendications

1. Procédé de fabrication d'une fermeture pour un récipient fabriqué dans un procédé (BFS) de remplissage et de moulage par insufflation en matière plastique, rempli et fermé, dans lequel pour la formation d'une liaison indissoluble entre une partie (8) d'une paroi (6) du récipient, prévue pour une opération de prélèvement et/ou d'addition, formant de préférence un point de piqûre, et une matière (28) d'étanchéité en une matière plastique thermoplastique, comme un élastomère (TPE) thermoplastique, on effectue une opération de jonction et en même temps une réduction du nombre de germes dans un espace (34) entre une coiffe (12) de fermeture et la paroi (6) du récipient, dans lequel on chauffe les partenaires (8, 28) de la jonction et on les presse l'un contre l'autre pour la liaison, dans lequel la coiffe (12) de fermeture chevauche la matière (28) d'étanchéité disposée entre une paroi intérieure de la coiffe (12) de fermeture et la partie (8) de prélèvement de la paroi (6) du récipient, **caractérisé en ce que** l'on effectue l'opération de jonction entre la matière (28) d'étanchéité et une membrane (8) cédant élastiquement et formant la région de prélèvement de la paroi (6) du récipient de manière à ce que les partenaires (8, 28) de la jonction soient, pendant une opération de réduction du nombre de germes, portés à une température comprise entre 105°C et 140°C et **en ce que** l'on produit une pression pressant les partenaires (8, 28) de la jonction l'un contre l'autre au moins en partie par la pression interne, s'appliquant à la membrane (8) par le chauffage, du récipient rempli, de manière à ce que la membrane (8), de conformation souple, soit, à partir d'une voussure entrante, tournée dans la direction de l'intérieur du récipient, pressée dans la direction de la matière (28) d'étanchéité jusqu'à ce que la liaison solide entre la membrane (8) et la matière (28) d'étanchéité soit produite.

2. Procédé suivant la revendication 1, **caractérisé en ce que** dans l'opération de jonction, le côté extérieur de la matière (28) d'étanchéité est appuyé contre la pression d'application d'une pression.

3. Procédé suivant la revendication 1 ou 2, **caractérisé en ce que** l'on effectue l'opération de jonction à des températures de 105°C à 140°C pendant un laps de temps d'au moins 5 minutes à des pressions s'appliquant à la membrane (8) allant jusqu'à 4 bar.

4. Procédé suivant l'une des revendications précédentes, **caractérisé en ce que** l'on effectue l'opération de jonction dans un autoclave.

5. Procédé suivant l'une des revendications précédentes, **caractérisé en ce que** l'on effectue l'opération de jonction à une température de 108°C à 138°C, de préférence de 110°C à 129°C, d'une manière particulière préférée, de 115°C à 124°C, pendant une durée d'au moins 10 minutes.

6. Procédé suivant l'une des revendications précédentes, **caractérisé en ce que** la matière (28) d'étanchéité est appuyée contre la pression d'application d'une pression par une coiffe (12) de fermeture rigide mise sur la tête (4) du récipient.

7. Procédé suivant l'une des revendications précédentes, **caractérisé en ce que** l'on utilise une matière (28) d'étanchéité d'une dureté suivant ISO 868 de moins de 60 Shore A, de préférence de moins de 50 Shore A, d'une manière particulièrement préférée de moins de 40 Shore A à une température d'autoclavage de plus de 105°C.

8. Procédé suivant l'une des revendications précédentes, **caractérisé en ce que** l'on effectue l'opération de jonction sur une membrane (8), dont la surface est plus grande que la surface (32) de contact du joint formé avec la matière (28) d'étanchéité.

9. Procédé suivant l'une des revendications précédentes, **caractérisé en ce que** l'on utilise comme matière (28) d'étanchéité des matières comme des copolymères séquencés styréniques (TPS), des vulcanisats thermoplastiques (TPV), notamment à base de mélanges EPDM/PP.

10. Récipient, qui a une fermeture fabriquée selon le procédé suivant l'une des revendications 1 à 9 et qui est fabriqué, rempli et fermé par un procédé de moulage par insufflation (BFS) et dont la paroi (6, 8) du récipient peut être transpercée en vue d'accéder au produit de remplissage au moyen d'une canule ou d'une partie à piquer, dans lequel la fermeture a une matière (28) d'étanchéité pour rendre étanche un point de piqûre formé lors d'une opération de prélèvement sur une partie (8) de prélèvement de la paroi (6) du récipient, dans lequel une coiffe (12) de fermeture chevauche la matière (28) d'étanchéité disposée entre une paroi intérieure de la coiffe (12) de fermeture et la partie (8) de prélèvement de la paroi (6) du récipient, **caractérisé en ce que** la matière (28) d'étanchéité respective est disposée du côté extérieur, tourné vers l'atmosphère ambiante, de la partie (8) de prélèvement, ayant le point de piqûre, de la paroi (6) du récipient et **en ce que** la matière (28) d'étanchéité respective est reliée par une liaison de jonction à coopération de matière avec la paroi (6, 8) du récipient tournée vers elle, qui s'étend dans au moins un plan.

11. Récipient suivant la revendication 10, **caractérisé en ce qu'**une coiffe (12) de fermeture est mise sur une tête (4) du récipient reliée à une partie principale du récipient par une partie (2) de col.

12. Récipient suivant la revendication 11, **caractérisé en ce que** la partie de prélèvement est formée sur la tête du récipient par une partie de la paroi du récipient formant une membrane (8) cédant élastiquement à laquelle la matière (28) d'étanchéité s'applique, dont la face, loin de la membrane, (8) est appuyée sur la coiffe (12) de fermeture.

13. Récipient suivant l'une des revendications 10 à 12, **caractérisé en ce qu'**il est prévu une matière (28) d'étanchéité sous la forme d'une pièce en forme de disque.

14. Récipient suivant la revendication 13, **caractérisé en ce que** la matière (28) d'étanchéité en formant de disque a, pour la formation de la surface (32) de contact, sur la membrane (8) au moins une nervure (30) annulaire en saillie du côté tourné vers celle-ci.

15. Récipient suivant l'une des revendications 11 à 14, **caractérisé en ce que** la coiffe (12) de fermeture est en une matière plastique fixée à la tête (4) du récipient par soudure étanche à la pression et a une partie (20) d'ouverture pouvant être détachée pour l'accès au produit de remplissage.
